# EUROPEAN PATENT APPLICATION

(11) **EP 1 990 898 A2**
(43) Date of publication of application: **12.11.2008**
(21) Application number: 08155858.7
(22) Date of filing: 08.05.2008
(51) Int. Cl.: H02K 15/00, H02K 3/487

(54) **Method to repair a generator rotor tooth and corresponding rotor**

(30) Priority: 11.05.2007 US 803116
(71) Applicant: GENERAL ELECTRIC COMPANY, Schenectady, NY 12345 (US)
(72) Inventor: Reville, Christopher, Greenfield, NY 12833 (US)
(74) Representative: Illingworth-Law, William Illingworth

(57) **Abstract**

Disclosed is a method of repairing at least one side of a dovetail portion (32) of a generator slot wall (34). The dovetail portion (32) of the slot wall (34) is receptive of at least two adjacent slot wedges (18), and the dovetail portion (32) includes a radial entry surface, an inwardly tapered surface, and an intermediate radial surface. The method includes forming at least one repair groove (36) at least partly along the inwardly tapered surface and in a radial direction along the radial entry surface. The forming removes material from the slot wall (34). At least two adjacent slot wedges (18) are replaced with at least two repair wedges (38). The at least two repair wedges (38) have a butt joint (30) between the adjacent repair wedges (38) and the butt joint (30) is located between adjacent repair grooves (36).

## Description

### BACKGROUND

The subject invention relates to generator rotors. More particularly, the subject invention relates to repair of rotors that have experienced fretting damage and/or cracks in rotor teeth located at butt joints of axially aligned rotor wedges.

Conventional dynamoelectric machines, such as generators used with gas and steam turbines, employ forged rotors of magnetic material into which radial slots are machined for receiving the conductive turns of field windings which are interconnected such as to produce a desired magnetic flux pattern. Typically, included in such conventional rotor slots are creepage blocks at both the top and bottom ends of the slot as well as coil slot wedges for resisting the radially outward forces exerted on the windings when the rotor is operational.

The slot wedges, which are generally dovetail shaped, are used to maintain the copper coils in place while the rotor is spinning at, for example, 3600 revolutions per minute. The coil slot wedges are typically 6 to 12 inches long with a number of such wedges being required for each coil slot particularly in the longer rotors with high electrical ratings. Tangential movement of adjacent wedges at the butt joint of the wedges causes fretting damage to wedge slot walls of the rotor.

To repair the rotor, the damaged material is removed via a machining process or other method. To prevent future fretting damage, the steel wedges are replaced with identically configured wedges which may be made from aluminum. This repair, however, returns the wedge butt joints to their original locations. The rotor tooth may be further damaged at the site of the repair in a subsequent negative sequence event. In a negative sequence event, negative sequence currents flowing in the generator rotor cause a double-frequency torque on the generator rotor and cause eddy currents to flow on the rotor surface, which could result in excessive heating and, in some cases, arcing. Rotor teeth further damaged by a negative sequence event at the site of the repair are rendered unrepairable because of this further damage.

What is needed is a rotor tooth repair, including a wedge design, that repairs the fretting damage, removes the risk of future fretting damage, and is a more robust repair, increasing the capability of withstanding a negative sequence event.

### BRIEF DESCRIPTION OF THE INVENTION

The present invention provides a method of repairing at least one side of a dovetail portion of a generator slot wall. The dovetail portion of the slot wall is receptive of at least two adjacent slot wedges, and the dovetail portion includes a radial entry surface, an inwardly tapered surface, and an intermediate radial surface.

The method includes forming at least one repair groove at least partly along the inwardly tapered surface and in a radial direction along the radial entry surface. The forming removes material from the slot wall. At least two adjacent slot wedges are replaced with at least two repair wedges. The at least two repair wedges have a butt joint between the adjacent repair wedges and the butt joint is located between adjacent repair grooves.

These and other objects of the present invention will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other objects, features, and advantages of the invention are apparent from the following detailed description of embodiments provided by way of example only taken in conjunction with the accompanying drawings in which:
FIG. 1 is a partial cross sectional view of a generator rotor;
FIG. 2 is a cross-sectional view of a core slot of FIG. 1;
FIG. 3 is a view illustrating an axial arrangement of slot wedges in a core slot;
FIG. 4 is a partial perspective view of an example of a repair groove;
FIG. 5 is a view illustrating an axial arrangement of repair wedges in a repaired core slot;
FIG. 6 is a view illustrating an axial arrangement of slot wedges in a repaired core slot; and
FIG. 7 is a view illustrating an axial arrangement of repair wedges having ventilation holes.

The detailed description explains embodiments of the invention, together with advantages and features, by way of example with reference to the drawings.

### DETAILED DESCRIPTION OF THE INVENTION

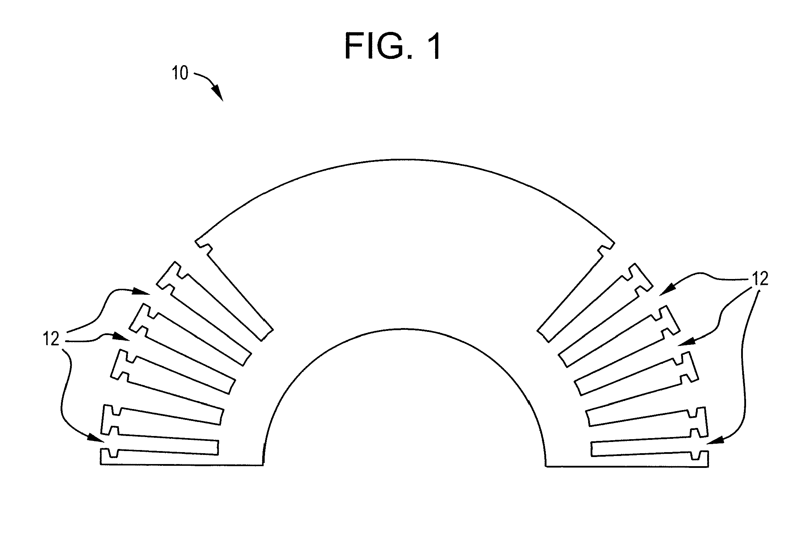

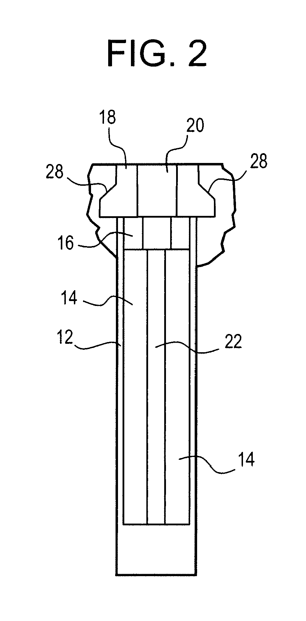

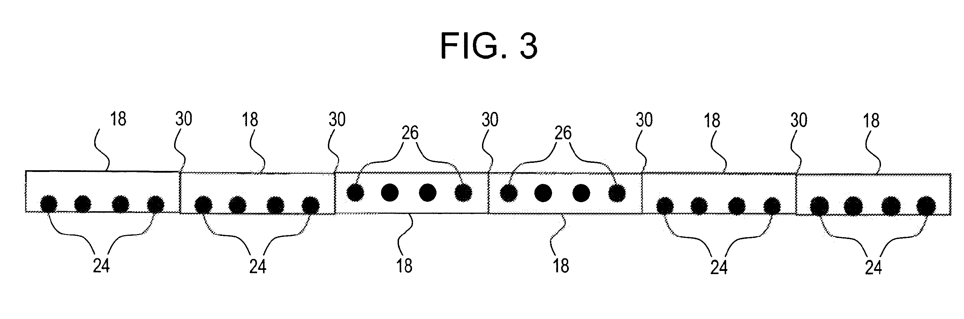

Shown in FIG. 1 is a generator rotor 10. A plurality of axially-extending core slots 12 are arranged radially in the rotor 10. As shown in FIG. 2, each core slot 12 may contain conductive coils 14, a creepage block 16, and a plurality of axially aligned slot wedges 18 stacked in radially outward sequence in the core slot 12. The slot wedges 18 are generally made from steel or aluminum. The slot wedges 18 may, for example, have a generally dovetail-shaped cross section, and are located and arranged so as to maintain the conductive coils 14 and the creepage block 16 in place while the rotor 10 is spinning. The slot wedges 18 may also include ventilation holes 20 which are generally in alignment with ventilation channels 22. The ventilation channels 22 pass through the conductive coils 14 and through the creepage block 16. As shown in FIG. 3, the slot wedges 18 are arranged axially in each core slot 12. Some slot wedges 18 may include ventilation holes configured as inlet holes 24 to guide air into a ventilation channel 22 and/or outlet holes 26 to direct air from a ventilation channel 22.

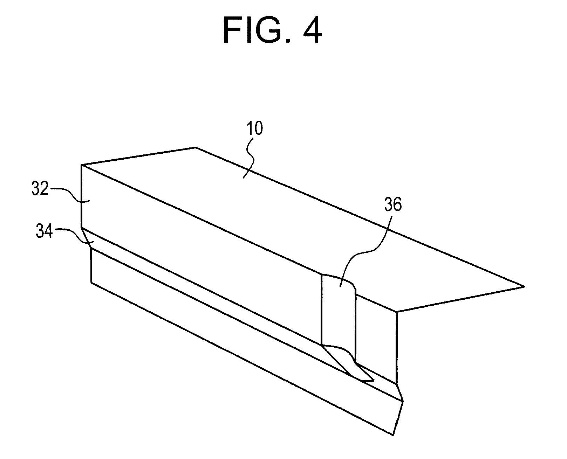

Fretting fatigue damage occurs during rotor operation in the coil slots 12, specifically in slot walls 28, at butt joints 30 of axially adjacent slot wedges 18. Referring to FIG. 4, material, including damaged material (hereinafter referred to as "damaged material"), is removed from the rotor 10 by machining or other means. The machined area is in a wedge-receiving dovetail portion 32 of a slot wall 34. The machining creates a groove 36 which, in some embodiments, may be concave in shape. While the size of the groove 36 may depend on the size and configuration of the area to repair, an example of a groove 36 is in the range of about .03 inches to .09 inches in depth and about .035 inches to .040 inches wide. Once the rotor 10 is machined to form the groove 36, sharp edges of the groove 36 may be radiused. Machining in this manner minimally reduces the low and high cycle fatigue life of the rotor 10.

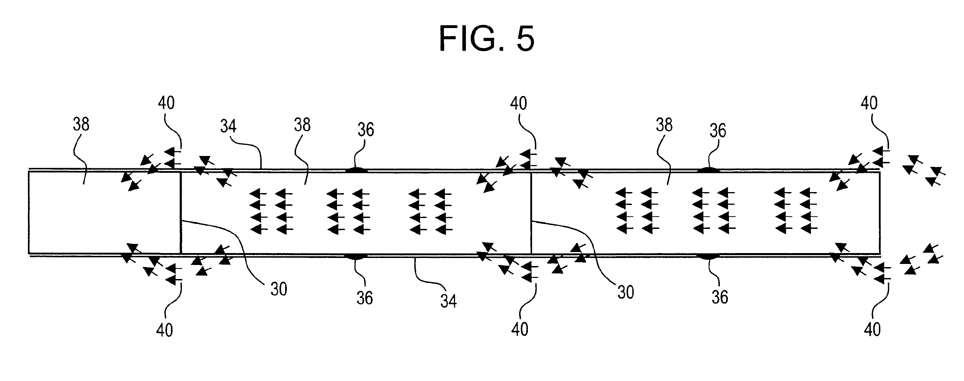

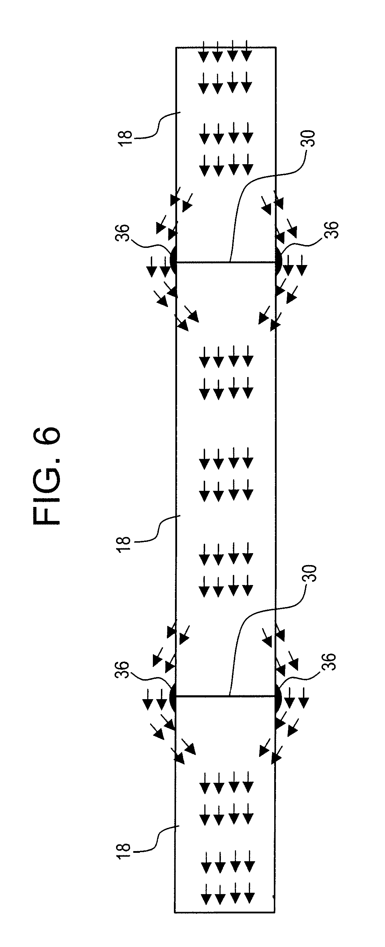

Once the machine repair is completed, repair wedges 38 are installed into the repaired coil slots 12. As shown in FIG. 5, the repair wedges 38 are disposed such that butt joints 30 between adjacent repair wedges 38 are disposed axially between grooves 36 on the same slot wall 34. Locating the butt joints 30 axially between grooves 36 minimizes the potential for irreparable damage to the rotor 10 in the case of a negative sequence event. During a negative sequence event, current flows as shown by the arrows in FIG. 5, potentially damaging the rotor in areas 40. The damage from this event can be repaired by machining another groove 36 at the location of the damage. If, on the other hand, the wedges 18 are replaced with the butt joints 30 substantially aligning with grooves 36 as shown in FIG. 6, negative sequence current may damage the rotor 10 in a previously repaired area of a groove 36. A second machining of the groove 36 to repair damage from a negative sequence event may extend the rotor 10 beyond its design limits, so the damage is irreparable.

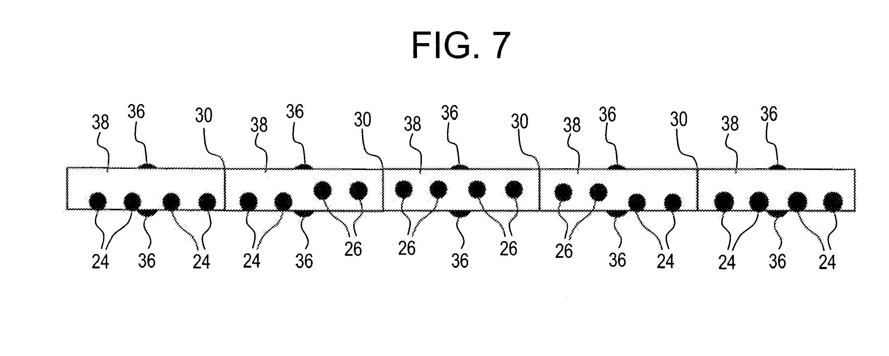

The repair wedges 38 may also include inlet holes 24 and/or outlet holes 26. In some embodiments, and as shown in FIG. 7, the inlet holes 24 and/or the outlet holes 26 are located and configured in the plurality of repair wedges 38 to duplicate a pattern of inlet holes 24 and outlet holes 26 of the slot wedges 18 prior to the repair, as is illustrated in FIG. 3. The pattern is duplicated in order to ensure that cooling characteristics of the post repair rotor 10 is equal to that of the rotor prior to being repaired.

While embodiments of the invention have been described above, it will be understood that those skilled in the art, both now and in the future, may make various improvements and enhancements which fall within the scope of the claims which follow. These claims should be construed to maintain the proper protection for the invention first described.

## Claims

1. A method of repairing at least one side of a dovetail portion (32) of a generator slot wall (28, 34), the dovetail portion (32) receptive of at least two adjacent slot wedges (18) and including a radial entry surface, an inwardly tapered surface, and an intermediate radial surface, the method comprising:
forming at least one repair groove (36) at least partly along the inwardly tapered surface and in a radial direction along the radial entry surface, the forming removing material from the slot wall (28); and
replacing the at least two adjacent slot wedges (18) with at least two repair wedges (38), the at least two repair wedges (38) having a butt joint (30) between adjacent repair wedges (38), the butt joint (30) located between adjacent repair grooves.

2. The method of claim 1 wherein the at least two repair wedges (38) include one or more ventilation holes (20) extending radially through the at least two repair wedges (38).

3. The method of claim 2 wherein the ventilation holes (20) are arranged to approximate a pattern of ventilation holes (20) in the slot wedges (18).

4. The method of any one of the preceding claims where the groove (36) is concave.

5. The method of any one of the preceding claims wherein the groove (36) has a depth of about .03 inches to about .09 inches.

6. The method of any one of the preceding claims wherein the groove (36) has a width of about .035 inches to about .04 inches.

7. The method of any one of the preceding claims wherein edges of the groove (36) are radiused.

8. The method of any one of the preceding claims wherein the at least two repair wedges (38) comprise aluminum.

9. A generator rotor (10) comprising:
a plurality of radially-arranged generator slots, each wall of each generator slot having a dovetail portion (32) including a radial entry surface, an inwardly tapered surface, and an intermediate radial surface;
one or more concave repair grooves disposed in at least one of the plurality of generator slots, at least partly along the inwardly tapered surface and in a radial direction along the radial entry surface; and
at least two adjacent repair wedges (38) receivable in the dovetail portion (32) of the generator slots, the at least two adjacent repair wedges (38) having at least one butt joint (30) therebetween, the butt joint (30) located between adjacent repair grooves.

10. The generator rotor (10) of claim 9 wherein the at least two repair wedges (38) include one or more ventilation holes (20) extending radially through the repair wedges (38).
